# EUROPEAN PATENT SPECIFICATION

(11) **EP 0 738 587 B1**
(45) Date of publication and mention of the grant of the patent: **27.12.2000**
(21) Application number: 96302704.0
(22) Date of filing: 17.04.1996
(51) Int. Cl.: B31B 5/74

(54) **Pressure closing mechanism**
Druckverschlussvorrichtung
Mécanisme à pression de fermeture

(30) Priority: 21.04.1995 US 426105
(43) Date of publication of application: 23.10.1996
(73) Proprietor: ELOPAK SYSTEMS AG, 8152 Glattbrugg (CH)
(72) Inventor: Showler, Michael F., Waterford, Michigan 48327 (US); McDonald, Kenneth Paul, Wixom, Michigan 48393 (US); Lukasiewicz, Anthony J., Howell, Michigan 48843 (US)
(74) Representative: Burrows, Anthony Gregory

(56) References cited:
- EP-A- 0 242 805
- WO-A-85/01013
- GB-A- 1 292 822
- US-A- 3 555 975
- US-A- 4 038 908

## Description

This invention relates generally to closing mechanisms and, more particularly, to a pressure closing mechanism for use on a turret of a liquid-carrying, thermoplastic coated carton forming, filling and sealing machine.

Expansible sealers are disclosed in US-A-5,085,029; 4,735,031; 4,259,765; 4,193,341; 4,167,092; 3,992,850; and 2,634,773. A typical carton sealing press plate arrangement is disclosed in US-A-3,699,743.

US-A-3555975 discloses a forming machine for closing and sealing an end of a carton tube of plastics or of plastics-coated paper-base. A rotary, four-armed spider having mandrel blocks at the outer ends of its arms receives carton tubes in turn to index them through four stations arranged in a ring. The spider includes a drum-form hub upon drive shaft means mounted at respective opposite ends in a body frame. At a final folding and sealing station the body frame mounts piston means to which is connected, by way of a piston arm, a pressure pad. When a mandrel arm stops at the station, presenting to the pressure pad heated and partially inwardly folded end panels of the outer end of a carton tube on the mandrel arm, the piston means displaces the pressure pad radially inwards relative to the spider to squeeze those end panels between the pad and the mandrel block. The compression force on the block is transmitted to the body frame by way of the shaft means and bearings thereof, while the reaction force on the pad is transmitted to the body frame by way of the piston arm and the piston means. In this prior apparatus, the shaft means, the bearings, and those body frame parts subjected to the forces arising from the pressing all have to be built to withstand those forces, whilst the bearings suffer wear produced by those forces.

GB-A-1292822 discloses a forming, filling and sealing machine with a rotary multi-armed spider for indexing plastics-coated paperboard carton tubes from a receiving station to a mandrel-stripping station by way of a bottom end panels pre-folding station, a bottom end panels heating station and a bottom end panels final folding and sealing station. The spider is mounted on and connected to one end region of a driving shaft which projects in cantilever fashion from bearings in a frame wall. At the final folding and sealing station, a pressure pad is displaceable radially inwards of the spider by a pneumatic piston-and-cylinder device which is resiliently mounted on the machine frame by way of pins and co-axial rubber rings of which the axes are parallel with the spider axis. The pressure pad squeezes the bottom end closure panels of the carton tube against the end of the mandrel arm. A pair of parallel rods and a yoke linking their inner ends take up the forces produced by the action of the pressure pad on the mandrel. The rods are connected to the piston-and-cylinder device so as to be longitudinally adjustable. When the pad is not applying force to the mandrel end, the yoke is radially spaced a small distance outwardly from a hub of the spider. When the pad applies a force to the mandrel end, first of all the pneumatic cylinder moves radially outwardly resiliently, radially compressing the rubber rings, and displacing with it the rods and the yoke until the yoke comes to bear against the spider hub. Then, the force loop created by the pressing action of the pad extends through the rods and the yoke, rather than through the machine frame and thus the spider shaft bearings. However, a significant proportion of the parts of the machine have to be built to withstand the forces in the loop.

US-A-4986058 discloses a similar forming, filling and sealing machine, but with two pairs of rotary, multi-armed spiders. Each pair of spiders is fixed to one end region of a drive shaft which is mounted unilaterally in ball bearings in a frame wall. At the final folding and sealing station, spring-mounted pressure pads are applied radially inwardly to the outer carton tube ends to squeeze them against rectangular mandrel arms of the stopped spiders. The pressure pads are reciprocated by an eccentric shaft arrangement mounted at its opposite end regions in roller bearings in the body wall and a bearing in a cantilever-form housing attached to the body wall. Again, although the force loops created by the pressing action do not pass through the machine frame, a significant proportion of the parts of the machine have to be built to withstand the forces in the force loops.

EP-A-0489526 discloses a carton top sealing mechanism for use on a forming, filling and sealing machine for plastics-coated paperboard cartons. The mechanism includes oppositely disposed fixed and movable sealing jaws between which heated adjacent panels of a gable top closure are positioned. A pneumatic bladder operatively connected to the movable sealing jaw is inflated to move the jaw towards the fixed jaw to squeeze the heated panels together to form a top sealing fin.

According to the present invention, there is provided in combination,
frame means,
supporting means comprising a mandrel and movably mounted upon said frame means, said mandrel serving to receive over an end thereof a tube whereof an end projecting beyond said end of said mandrel is to be closed,
driving means serving to move said supporting means relative to said frame means,
and pressing means disposed beyond said end of said mandrel and serving to apply force longitudinally of said mandrel in one direction to close said end of said tube, and
tie means additional to said frame means, extending from said pressing means to said supporting means and retaining said pressing means relative to said supporting means against reaction force longitudinally of said mandrel in the opposite direction and produced by the pressing action of the pressing means, characterized in that said tie means comprises at least one shoulder facing generally in said opposite direction and said supporting means comprises at least one shoulder, which shoulder(s) on said tie means being apt to press against the shoulder(s) on said supporting means.

Owing to the invention, it is possible to reduce the proportion of the parts of the combination which is subjected to a force loop produced by the pressing means and thus to reduce the proportion of those parts which has to be built to withstand the forces in such force loop.

In the invention, tie means extending between end-pressing means, on the one hand, and tube-supporting means, such as a mandrel or mandrel support, on the other hand, acts to take up the reaction forces of the pressing of the tube end onto the mandrel.

Advantageously, the pressing means comprises an inflatable bladder. It is thus possible to provide a relatively compact pressure-applying mechanism for a tube end on a mandrel.

Thereby, the end-pressing means is simplified.

The invention is particularly applicable to final folding and/or sealing of an end closure, in particular final folding and sealing of a carton bottom end closure on a forming, filling and sealing machine.

In a preferred embodiment of the invention, a sealing mechanism has a yoke into which is positioned a mandrel with a carton tube mounted thereon with overlapped end closure panels, the yoke including side walls, a closed outer end wall, oppositely disposed, inwardly extending flanges formed on the inner ends of the side walls, with co-operating slots formed in the mandrel. An expansible bladder and a pressure pad are mounted in the yoke for sealing the panels upon expansion of the bladder, by forcing the yoke radially outwardly such that the flanges engage walls of the slots, providing a compressive force on the panels.

In order that the invention may be clearly understood and readily carried into effect, reference will now be made, by way of example, to the accompanying drawings, in which:-
Figure 1 is a fragmentary side elevational view of a carton forming, filling and sealing machine;
Figure 2 is a layout view of a carton black after it has been folded from a flat blank and side-seamed into a four-sided flat structure suitable for being further formed into a four-sided tube and bottom-sealed by that part of the machine shown in Figure 1;
Figure 3 is a fragmentary perspective view of the bottom closure panels of a four-sided tube into which the flat, side-seam-sealed blank of Figure 2 is opened, illustrating particularly the bottom end panels to be pressure-sealed; and
Figure 4 is an enlarged, sectional elevational view of a final folding and sealing station of the machine.

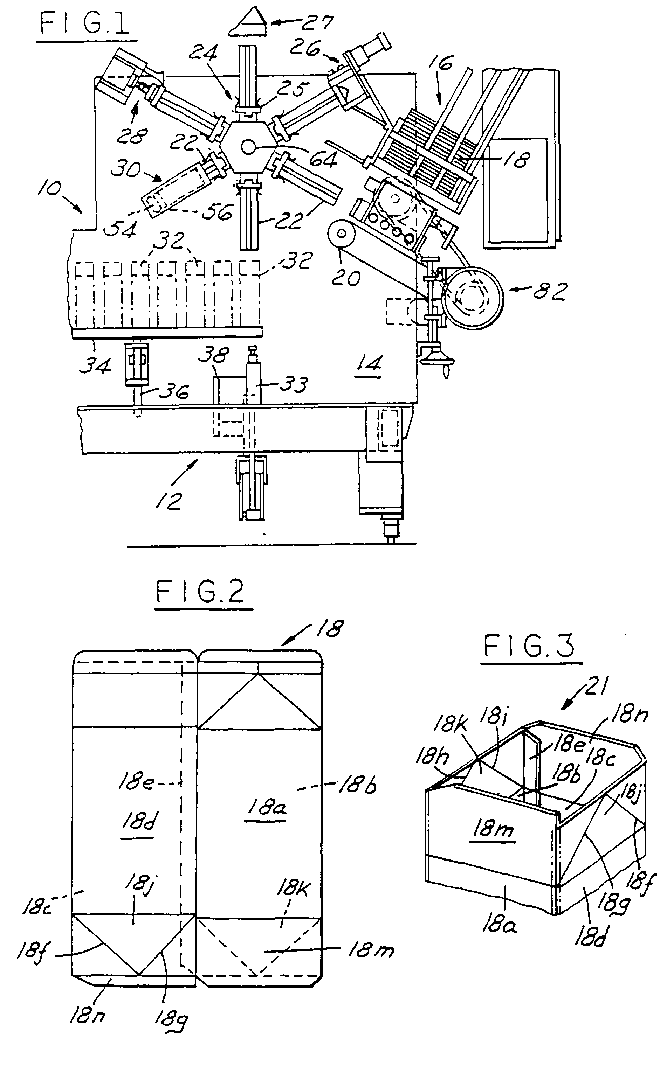

Referring now to the drawings in greater detail, Figure 1 illustrates a forming, filling and sealing machine 10 for liquid packaging, including frame means comprised of a base 12 and a vertical support keel 14 mounted along the longitudinal axis of the base 12. The loading, forming, filling and sealing components are mounted on one side of the keel 14 as follows:

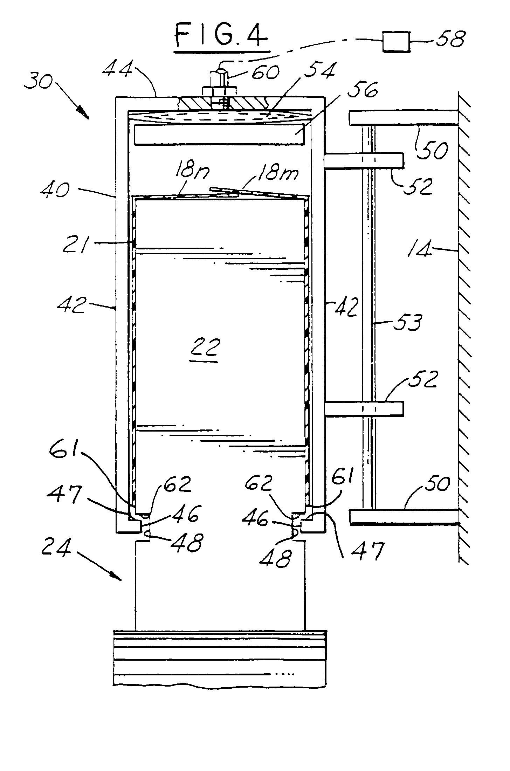

A magazine 16 for holding a plurality of paperboard blanks 18 is mounted on the one side of one end of the keel. The blanks 18 are illustrated in Figure 2 as having four full width side panels 18a, 18b, 18c and 18d, and a side seam flap 18e, with the panels 18b and 18c being folded behind the panels 18a and 18d, respectively, and the flap 18e sealed to the inner edge portion of the panel 18c. A loading mechanism 20 is mounted on the keel just below the magazine 16 and adapted to withdraw one blank 18 at a time from the magazine 16 while opening same into a four-sided tube 21 (FIG. 3), and then to load such individual tube onto one of six mandrels 22 of an indexable turret mechanism 24. The latter is rotatably mounted on an upper portion of the keel 14. The receiving mandrel is positioned at 4:00 o'clock when a paperboard tube 21 is slid thereon by the loading mechanism 20. An adjustable stop member 25 is operatively connected to each mandrel 22 to accommodate the forming of carton bottom closures of cartons having the same cross-section but different heights.

The mandrel indexes counterclockwise in FIG. 1 to a 2:00 o'clock position where two panels 18j and 18k of the usual four bottom closure panels 18j; 18k, 18m and 18n of the tube 21 are pre-broken along preformed score lines 18f and 18g, and 18h and 18i (FIG. 3) by a prebreaker unit 26. At the 12:00 o'clock position, the four bottom closure panels of the tube 21 are heated by a suitable heater 27 mounted on the keel 14 so as to extend above the 12:00 o'clock mandrel position. The bottom heated tube 21 and the mandrel 22 are next indexed to a 10:00 o'clock position where a folding unit 28 folds the bottom panels into an overlapped substantially flat configuration. Thereafter, the mandrel 22 bearing the tube 21 is indexed to an 8:00 o'clock position, where it enters a sealing mechanism 30. As will be explained, the mechanism 30 applies pressure against, and seals, the overlapped panels together, changing the tube 21 into a bottom sealed container or carton 32 suitable for containing a liquid. Thereafter the bottom sealed carton is indexed to an unloading 6:00 o'clock position.

At the latter position, the carton is stripped from the mandrel 22 by a stripping unit, represented as 33, and pulled downwardly to rest on an endless conveyor 34. As may be noted in FIG. 1, the stripping unit 33 is mounted on the keel 14, supported thereon by a bracket 38. As the conveyor 34 indexes leftward in FIG. 1, the rotation of the turret mechanism 24 is coordinated with the movement of the conveyor so as to continuously supply bottom sealed cartons 32 at regular intervals to the conveyor.

With the carton 32 thus seated on the conveyor 34, it is in position to be transferred through the usual stations (not shown) for pre-breaking, filling, folding and sealing the top closure panels of a thermoplastic-coated, liquid carrying carton.

Referring now to FIG. 4, the sealing mechanism 30 includes tie means comprised of a yoke 40 into which each mandrel 22 and its associated tube 21 indexes. As shown, the yoke 40 has open inlet and outlet sides in the path of the mandrels 22, and two oppositely disposed closed side walls 42 and an outer closed end wall 44. Inwardly extending, arcuate shaped flanges 46 are formed on the inner edges of the side walls 42.

Oppositely disposed, arcuate shaped slots 48 are formed in the sides of each mandrel 22 to accommodate the entry of each mandrel into the framework 40. Suitable brackets 50 serve to fix a bar 53 to the keel 14, parallel to the plane of the path of the mandrels 22, while suitable brackets 52 are slidably mounted on the bar 53 and are fixed to the yoke 40, to permit a predetermined radial movement of the yoke 40, for a purpose to be explained.

An expansible bladder 54 is secured at its upper surface (in FIG. 4), in any suitable manner, such as by gluing, to the inner surface of the end wall 44. A pressure pad 56 having face dimensions substantially matching the cross-section of the sleeve 21, and of a predetermined thickness is secured in any suitable manner at its upper surface (in FIG. 4) to the adjacent surface of the expansible bladder 54, while its lower surface is positioned adjacent the overlapped end panels 18j, 18k, 18m, and 18n of the sleeve 21.

A source of fluid under pressure, represented at 58, is operatively connected via a line 60 to the expandable bladder 54.

In operation, once the tube covered mandrel 22 enters the yoke 40 and dwells therein, fluid from the source 58 is timed to enter the bladder 54 to expand same. This forces the pressure pad 56 into engagement against the previously heated and folded and overlapping panels 18j, 18k, 18m and 18n of the tube 21, to pressure seal same together between the pad 56 and the end face of the mandrel 22.

More specifically, the bladder 54 expands to the point where the flanges 46 are caused to be lifted upwardly (in FIG. 4) against the radially outermost surfaces 62 of the slots 48, with no radially inwardly directed force along the mandrel 22 to the hub of the turret mechanism 24 and its supporting shaft, represented as 64 in Figure 1. In other words, the flanges 46 provide radially outwardly directed shoulders 47 which come to bear on the radially inwardly directed shoulders (62) provided on each mandrel 22. These shoulders 62 are provided almost immediately radially inwards of the radially innermost edges 61 of the tallest size of carton 21 which the mandrel 22 is designed to receive, so that the loops of forces created by the pressure pad 56 are as short as practical, thereby minimizing the proportion of the machine which has to be built to withstand those forces.

As described, it is apparent that no axial force is exerted by the pressing means 54, 56 through the mandrels 22 to the hub of the turret mechanism 24 and, hence, into the shaft 64 on which the turret mechanism is mounted. This eliminates a load on the shaft and its associated bearings, permitting a smaller and lighter mechanism, with a longer life span.

## Claims

1. In combination,
frame means (14),
supporting means (24) comprising a mandrel (22) and movably mounted upon said frame means (14), said mandrel (22) serving to receive over an end thereof a tube (21) whereof an end projecting beyond said end of said mandrel (22) is to be closed,
driving means serving to move said supporting means (24) relative to said frame means (14),
and pressing means (54, 56) disposed beyond said end of said mandrel (22) and serving to apply force longitudinally of said mandrel (22) in one direction to close said end of said tube (21), and
tie means (40) additional to said frame means (14), extending from said pressing means (54,56) to said supporting means (24) and retaining said pressing means (54,56) relative to said supporting means (24) against reaction force longitudinally of said mandrel (22) in the opposite direction and produced by the pressing action of the pressing means (54,56), characterized in that said tie means (40) comprises at least one shoulder (47) facing generally in said opposite direction and said supporting means (22) comprises at least one shoulder (62), which shoulder(s) (47) on said tie means (40) being apt to press against the shoulder(s) (62) on said supporting means (22).

2. A combination according to claim 1, wherein said shoulder(s) (62) on said supporting means (22) is/are provided on said mandrel (22).

3. A combination according to claim 2, wherein the or each shoulder (62) provided on said mandrel (22) is located almost immediately beyond the intended location of the furthermost portions of the other end of the longest said tube (21) which the mandrel (22) is intended to receive.

4. A combination according to any preceding claim, wherein the or each shoulder (47) on said tie means (40) is provided by a flange (46) of said tie means (40).

5. A combination according to any preceding claim, wherein said tie means (40) comprises a yoke (40) comprised of an end member (44) and two oppositely disposed lateral members (42) arranged to receive said mandrel (22) therebetween, said pressing means (54,56) being mounted in said yoke (40) adjacent said end member (44) and arranged to act between said end member (44) and adjacent end parts (18j-18n) of said tube (21) to close the same, following entry of said mandrel (22) through an open side of said yoke (40), and each lateral member (42) being formed with such shoulder (47).

6. A combination according to claim 2 or 3, or claim 4 or 5 as appended to claim 2, wherein the or each shoulder (62) provided on said supporting means (24) constitutes a side wall (62) of a slot (48) formed in said mandrel (22) and extending transversely thereof.

7. A combination according to any preceding claim, and further comprising a source (58) of fluid under pressure, said pressing means (54,56) being connected to said source (58) and expansible by said fluid under pressure, said pressing means (54,56) comprising an expansible bladder (54) secured to said tie means (40).

8. A combination according to claim 7, wherein said pressing means (54,56) comprises a pressure pad (56) secured to said bladder (54) for bearing upon adjacent end parts of said tube (21).

9. A combination according to any preceding claim, wherein said supporting means (24) comprises a rotary spider (24) including a plurality of radially extending mandrels (22) including said mandrel (22), said spider (24) being so arranged that said mandrels (22) in turn pass said pressing means (54,56) and said tie means (40).

10. A combination according to any preceding claim, wherein said tie means (40) is slidably mounted upon a bar (53) fixed to said frame means (14) and extending away from said pressing means (54,56) in said one direction.

## Patentansprüche

1. Kombination aus
einer Rahmenvorrichtung (14),
einer bewegbar an der Rahmenvorrichtung (14) befestigten Haltevorrichtung (24) mit einem Dorn (22), der dazu dient, über einem seiner Enden eine Röhre (21) aufzunehmen, deren über das Ende des Dorns (22) abstehendes Ende geschlossen werden soll,
einer Antriebsvorrichtung zum Bewegen der Haltevorrichtung (24) relativ zu der Rahmenvorrichtung (14),
und einer hinter dem Ende des Dorns (22) angeordneten Druckvorrichtung (54,56) zum Aufbringen von Kraft in Längsrichtung des Dorns (22) in einer Richtung, in der das Ende der Röhre (21) geschlossen wird, und
einer zusätzlich zu der Rahmenvorrichtung (14) vorgesehenen Fixiervorrichtung (40), die sich von der Druckvorrichtung (54,56) zu der Haltevorrichtung (24) erstreckt und die Druckvorrichtung (54,56) relativ zu der Haltevorrichtung (24) gegen eine Reaktionskraft rückhält, die längs des Dorns (22) in der Gegenrichtung wirkt und durch die Druckwirkung der Druckvorrichtung (54,56) erzeugt wird,
dadurch gekennzeichnet, dass die Fixiervorrichtung (40) mindestens eine Schulter (47) aufweist, die im wesentlichen in die genannte Gegenrichtung weist, und die Haltevorrichtung (24) mindestens eine Schulter (62) aufweist, wobei die Schulter(n) (47) an der Fixiervorrichtung (40) in der Lage ist/sind, gegen die Schulter(n) (62) an der Haltevorrichtung (22) zu drücken.

2. Kombination nach Anspruch 1, bei der Schulter (62) der Haltevorrichtung (24) an dem Dorn (22) ausgebildet ist/sind.

3. Kombination nach Anspruch 2, bei der die oder jede an dem Dorn (22) ausgebildete Schulter (62) nahezu direkt hinter der beabsichtigten Position der am weitesten entfernten Bereiche des anderen Endes der längsten Röhre (21) angeordnet ist, die der Dorn (22) aufnehmen soll.

4. Kombination nach einem der vorhergehenden Ansprüche, bei dem die oder jede Schulter (47) an der Fixiervorrichtung (40) durch einen Flansch (46) der Fixiervorrichtung (40) gebildet ist.

5. Kombination nach einem der vorhergehenden Ansprüche, bei der die Fixiervorrichtung (40) ein Joch (40) mit einem Endteil (44) und zwei gegenüberliegend angeordneten Seitenteilen (42) aufweist, die derart angeordnet sind, dass sie den Dorn (22) zwischen sich aufnehmen, wobei die Druckvorrichtung (54,56) in dem Joch (40) nahe dem Endteil (44) befestigt ist und so angeordnet ist, dass sie zwischen dem Endteil (44) und benachbarten Endteilen (18j-18n) der Röhre (21) derart wirksam wird, dass im Anschluss an das Eintreten des Dorns (22) durch eine offene Seite des Jochs (40) die Röhre geschlossen wird, und wobei an jedem Seitenteil (42) eine Schulter (47) ausgebildet ist.

6. Kombination nach Anspruch 2 oder 3, oder Anspruch 4 oder 5 in Abhängigkeit von Anspruch 2, bei der die oder jede an der Haltevorrichtung (24) ausgebildete Schulter (62) eine Seitenwand (62) eines Schlitzes (48) bildet, der in dem Dorn (22) ausgebildet und quer zu diesem verläuft.

7. Kombination nach einem der vorhergehenden Ansprüche, ferner mit einer Druckfluidquelle (58), wobei die Druckvorrichtung (54,56) mit der Quelle (58) verbunden ist und durch das Druckfluid aufweitbar ist, und wobei die Druckvorrichtung (54,56) eine an der Fixiervorrichtung (40) befestigte aufweitbare Blase (54) aufweist.

8. Kombination nach Anspruch 7, bei der die Druckvorrichtung (54,56) einen an der Blase (54) befestigten Druckstempel (56) zum Andrücken an benachbarte Endteile der Röhre (21) aufweist.

9. Kombination nach einem der vorhergehenden Ansprüche, bei der die Haltevorrichtung (24) eine Drehspinne (24) mit mehreren radial abstehenden Dornen (22) einschließlich des genannten Dorns (22) aufweist, wobei die Spinne (24) derart angeordnet ist, dass die Dorne (22) der Reihe nach die Druckvorrichtung (54,56) und die Fixiervorrichtung (40) passieren.

10. Kombination nach einem der vorhergehenden Ansprüche, bei der die Fixiervorrichtung (40) gleitbar an einer an der Rahmenvorrichtung (14) festgelegten Stange (53) befestigt ist, und in der genannten einen Richtung von der Druckvorrichtung (54,56) absteht.

## Revendications

1. En combinaison,
des moyens formant bâti (14),
des moyens de support (24) comprenant un mandrin (22) et montés de manière mobile sur lesdits moyens formant bâti (14), ledit mandrin (22) servant à recevoir sur une extrémité de celui-ci un tube (21) dont une extrémité faisant saillie au-delà de ladite extrémité dudit mandrin (22) doit être fermée,
des moyens de commande servant à déplacer lesdits moyens de support (24) par rapport auxdits moyens formant bâti (14),
et des moyens presseurs (54, 55) disposés au-delà de ladite extrémité dudit mandrin (22) et servant à appliquer longitudinalement audit mandrin (22) une force dans une première direction pour fermer ladite extrémité dudit tube (21), et
des moyens de traction (40) additionnels auxdits moyens formant bâti (14), s'étendant desdits moyens presseurs (54, 56) auxdits moyens de support (24) et retenant lesdits moyens presseurs (54, 56) par rapport auxdits moyens de support (24) à l'encontre d'une force de réaction longitudinale audit mandrin (22) dans la direction opposée et produite par l'action de pression des moyens presseurs (54, 56), caractérisée en ce que lesdits moyens de traction (40) comprennent au moins un épaulement (47) dirigé de manière générale dans ladite direction opposée, et en ce que lesdits moyens de support (22) comprennent au moins un épaulement (62), le ou les épaulements (47) desdits moyens de traction (40) étant aptes à appuyer contre le ou les épaulements (62) desdits moyens de support (22).

2. Une combinaison selon la revendication 1, dans laquelle le ou lesdits épaulements (62) desdits moyens de support (22) est/sont prévus sur ledit mandrin (22).

3. Une combinaison selon la revendication 2, dans laquelle le ou chaque épaulement (62) prévu sur ledit mandrin (22) est placé presque immédiatement au-delà de l'emplacement prévu des parties les plus éloignées de l'autre extrémité du plus long tube (21) que le mandrin (22) est destiné à recevoir.

4. Une combinaison selon l'une quelconque revendication précédente, dans laquelle le ou chaque épaulement (47) desdits moyens de traction (40) est assuré par une bride (46) desdits moyens de traction (40).

5. Une combinaison selon une revendication précédente quelconque, dans laquelle lesdits moyens de traction (40) comprennent un étrier (40) composé d'un élément d'extrémité (44) et de deux éléments latéraux disposés de manière opposée (42) prévus pour recevoir entre eux ledit mandrin (22), lesdits moyens presseurs (54, 56) étant montés dans ledit étrier (40) de manière adjacente audit élément d'extrémité (44) et prévus pour agir entre ledit élément d'extrémité (44) et des parties d'extrémité adjacentes (18j-18n) dudit tube (21) pour fermer celui-ci, suivant l'entrée dudit mandrin (22) à travers un côté ouvert dudit étrier (40), et chaque élément latéral (42) présentant un tel épaulement (47).

6. Une combinaison selon la revendication 2 ou 3, ou la revendication 4 ou 5 dans sa dépendance de la revendication 2, dans laquelle le ou chaque épaulement (62) prévu sur lesdits moyens de support (24) constitue une paroi latérale (62) d'une fente (48) formée dans ledit mandrin (22) et s'étendant transversalement à celui-ci.

7. Une combinaison selon une revendication précédente quelconque, et comprenant en outre une source (58) de fluide sous pression, lesdits moyens presseurs (54, 56) étant reliés à ladite source (58) et pouvant être dilatés par ledit fluide sous pression, lesdits moyens presseurs (54, 56) comprenant une vessie dilatatable (54) fixée auxdits moyens de traction.

8. Une combinaison selon la revendication 7, dans laquelle lesdits moyens presseurs (54, 56) comprennent un patin de pression (56) fixé à ladite vessie (54) pour porter sur des parties d'extrémité adjacentes dudit tube (21).

9. Une combinaison selon une revendication précédente quelconque, dans laquelle lesdits moyens de support (24) comprennent un dispositif tournant en étoile (24) comprenant une pluralité de mandrins s'étendant radialement (22) comportant ledit mandrin (22), ledit dispositif en étoile (24) étant prévu de telle manière que lesdits mandrins (22) passent à leur tour devant lesdits moyens presseurs (54, 56) et lesdits moyens de traction (40).

10. Une combinaison selon une revendication précédente quelconque, dans laquelle lesdits moyens de traction (40) sont montés de manière coulissante sur une barre (53) fixée auxdits moyens formant bâti (14) et s'étendant à distance desdits moyens presseurs (54, 56) dans ladite première direction.
